(19) Europäisches Patentamt
European Patent Office
Office européen des brevets

(11) **EP 1 112 177 B1**

(12) **EUROPEAN PATENT SPECIFICATION**

(45) Date of publication and mention
of the grant of the patent:
**29.02.2012 Bulletin 2012/09**

(51) Int Cl.:
***B32B 5/26*** *(2006.01)*   ***B32B 7/08*** *(2006.01)*
***B32B 29/02*** *(2006.01)*

(21) Application number: **99928178.5**

(22) Date of filing: **19.07.1999**

(86) International application number:
**PCT/IB1999/001291**

(87) International publication number:
**WO 2000/005065 (03.02.2000 Gazette 2000/05)**

(54) **FACIAL TISSUE OF A PAPER WEB HAVING A LIQUID IMPERMEABLE, BREATHABLE BARRIER LAYER**

GESICHTSTUCH AUS EINER PAPIERBAHN MIT FLÜSSIGKEITSUNDURCHLÄSSIGER, ATMUNGSFÄHIGER SPERRSCHICHT

TISSU FACIAL DE BANDE DE PAPIER DOTEE D'UNE COUCHE BARRIERE IMPERMEABLE AUX LIQUIDES ET IMPER-PERSPIRANTE

(84) Designated Contracting States:
**AT BE CH CY DE DK ES FI FR GB GR IE IT LI LU MC NL PT SE**

(30) Priority: **22.07.1998 US 120828**

(43) Date of publication of application:
**04.07.2001 Bulletin 2001/27**

(73) Proprietor: **THE PROCTER & GAMBLE COMPANY**
**Cincinnati, OH 45202 (US)**

(72) Inventors:
• **CABELL, David, William**
**Cincinnati, OH 45248 (US)**
• **DINIUS, Cynthia, Sue**
**Cincinnati, OH 45241 (US)**
• **STEINHARDT, Mark, John**
**Cincinnati, OH 45249 (US)**
• **KELLY, Stephen, Robert**
**Owenton, KY 40359 (US)**

(74) Representative: **L'Huillier, Florent Charles et al**
**Procter & Gamble Service GmbH**
**Sulzbacher Strasse 40-50**
**65824 Schwalbach am Taunus (DE)**

(56) References cited:
DE-A- 2 737 756       DE-A- 3 029 028
DE-A- 19 654 249      US-A- 2 296 341
US-A- 3 987 792       US-A- 4 574 021
US-A- 4 636 418       US-A- 4 648 876
US-A- 5 128 182       US-A- 5 296 290

• **DATABASE WPI Section Ch, Week 199031 Derwent Publications Ltd., London, GB; Class A18, AN 1990-236040 XP002119679 & JP 02 164536 A (ASAHI CHEM IND CO LTD), 25 June 1990 (1990-06-25)**

**Description**

**FIELD OF THE INVENTION**

The present invention relates to paper webs, and more particularly to multiple ply paper webs having a breathable, liquid impermeable barrier layer.

**BACKGROUND OF THE INVENTION**

Cellulosic fibrous structures, such as paper webs, are well known in the art. Such paper webs can be used for facial tissues, toilet tissue, paper towels, and napkins, each of which is in widespread use today. If these products are to perform their intended tasks and find wide acceptance, the fibrous structure should exhibit suitable properties in terms of absorbency, bulk, strength, and softness.

Additionally, there is a desire to make such paper webs having increased ability to stop certain fluids from passing through the web during use. For facial tissues, it is desirable to stop the passage of bodily fluids during sneezing, coughing, nose blowing, and the like. These bodily fluids pose a heath risk due to the presence of bacteria, germs, or other pathogens. Once pathogens carried by mucous, saliva, or other droplets of bodily fluids pass through a facial tissue, they can remain on the hands of the user, thereby providing a means for transmission of germs, and possibly disease. The transfer of pathogens from person to person is known to frequently occur from hand to hand contact. Furthermore, it appears that the only defense against many viral diseases, including the common cold, is the prevention of their spread.

Airborne pathogens are not the only mode of disease transmission. Bloodborne pathogens are those organisms that can cause disease in humans and which are transmitted by human blood or other human body fluids. Other human body fluids include serum, vaginal secretions, and other body fluids contaminated with blood. Often it is desirable to use a paper web to absorb or wipe blood from the body. In these situations it is desirable to have a paper web with absorbent properties, but with a barrier layer to prevent rapid absorption through the paper web of blood or other human body fluids.

To prevent the spread of germs, bacteria, and other pathogens, attempts have been made to provide barrier layers in tissue products. For example, one or more plies of tissue may be treated with a substance designed to entrap and contain droplets of fluids. However, such substances may not form a complete barrier to the passage of fluids, particularly small droplets which can readily "strikethrough" tissue paper, or liquid that can be rapidly absorbed through. Therefore, treated tissues may not be capable of preventing the contamination of the hands of the user.

Other attempts at providing an effective barrier layer include the inclusion in the one or more plies of a waterproof pliable plastic material between the layers of the facial tissue. For example, U.S. Patent. No. 5,196,244 to Beck teaches a very thin, pliable material (e.g., polyethylene) incorporated between the layers of a tissue and held in place by embossing. However, plastic films can decrease the flexibility, or hand, of the material, as well as increase the noise of the tissue in use. Additionally, for safety reasons (e.g., to prevent accidental suffocation) it is important that the tissue remain air or vapor permeable to a certain extent.

U.S. Patent No. 4,885,202, to Lloyd et al., teaches the use of meltblown fibers intimately overall thermally bonded between two outer tissue plies for wet strength. However, the required thermal bonding can add stiffness to the multiple ply tissue, as well as increasing web stiffness and possibly increasing manufacturing costs.

Accordingly, it would be desirable to provide a facial tissue consisting of a flexible, breathable paper web which is liquid impermeable.

Additionally, it would be desirable to provide a facial tissue consisting of a cellulosic paper web which exhibits barrier properties to the passage of airborne pathogens in the form of liquid droplets, and is economically produced.

Further, it would be desirable to provide a facial tissue consisting of a flexible, breathable, cellulosic paper web which exhibits barrier properties to the passage of airborne or bloodborne pathogens.

**SUMMARY OF THE INVENTION**

Disclosed is a facial tissue consisting of multiple ply paper web comprising at least one outer cellulosic ply, preferably two outer cellulosic plies, passively bonded to at least one inner ply. The inner ply comprises meltblown fibers formed into a liquid-impermeable, breathable nonwoven web. The tissue plies can be creped tissue paper having a basis weight of from 10 g/m$^2$ to 100 g/m$^2$, preferably from 15 g/m$^2$ to 25 g/m$^2$.

In a preferred embodiment, the meltblown fibers of the inner ply comprise polypropylene fibers having an average diameter of less than 10 microns, and more preferably less than 2.5 microns. The nonwoven web can have a basis weight from 1 g/m$^2$ to 15 g/m$^2$, preferably from 1 g/m$^2$ to 10 g/m$^2$, and more preferably from 1 g/m$^2$ to 8 g/m$^2$.

In a preferred embodiment the inner ply has a Moisture Vapor Transmission Rate of at least 4000, and can hold a hydrostatic head of at least 20 mm H$_2$0.

**BRIEF DESCRIPTION OF THE DRAWINGS**

FIG. 1 is a cross-sectional view of a paper web having a liquid impermeable, breathable barrier layer according to the present invention.

FIG. 2 is a schematic representation of an apparatus for making a liquid impermeable, breathable paper web having a barrier layer according to the present invention.

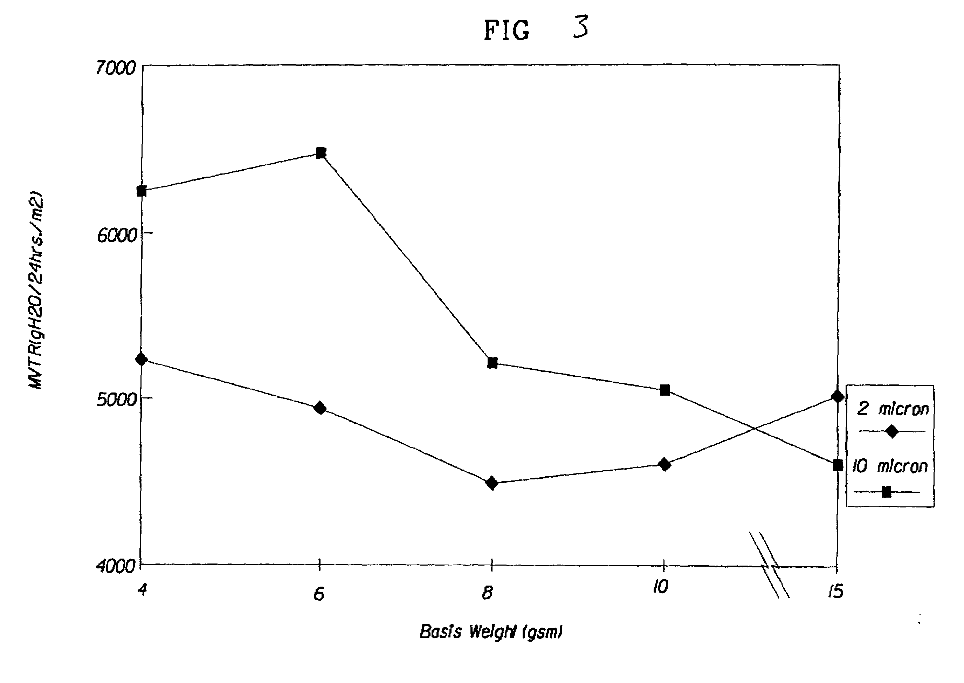

FIG. 3 is a graphical representation of the vapor transmission properties of a paper web of the present invention.

FIG. 4 is a graphical representation of the liquid impermeability properties of a paper web of the present invention.

**DETAILED DESCRIPTION OF THE INVENTION**

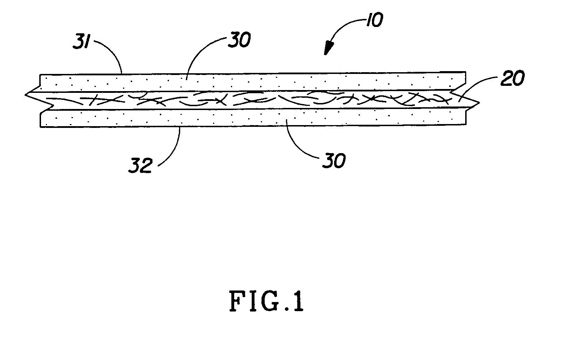

With reference to FIG. 1, the present invention comprises a multiple-ply paper web **10,** which, is a facial tissue. Paper web **10** comprises at least one liquid impermeable, breathable barrier layer **20,** disposed between and contiguous with at least two cellulosic paper webs **30.** While a three layer embodiment is illustrated, such an embodiment is considered preferred, but not limiting. In practice, it may be desirable to have a two-layer embodiment, with one barrier layer and one cellulosic paper web. Of course, paper webs **10** having more than three component layers are also contemplated and considered to be within the scope of the present invention.

Paper web **10** may be prepared as a single sheet for use as a facial tissue. A plurality of paper webs **10** may also be provided on a roll, the roll having perforations to define individual web sections, each section being removable for use, such as is commonly used for bath tissue (e.g., toilet paper). If prepared as bath tissue, roll dispensing is the preferred method of use, and paper such as the commercially successful CHARMIN® brand tissue paper can be used as the cellulosic paper layer. However, in a preferred embodiment, a plurality of paper webs **10** can be cut, folded, and optionally interleaved into a stack of facial tissues suitable for dispensing from a container, such as a box or tub. In this embodiment, paper such as the commercially successful PUFFS® brand facial tissue can be used as the cellulosic paper layer. CHARMIN® AND PUFFS® are both marketed by the instant assignee, The Procter & Gamble Co. of Cincinnati, OH.

As used herein, the term "paper web" or "cellulosic paper web" refers to the web of the present invention, which comprises at least one component layer that is not paper and at least one component layer that is cellulosic paper. For example, the web of the present invention can comprise a meltblown nonwoven barrier layer between cellulosic paper layers, or vice versa.

As used herein, the term "ply" means individual web components disposed in a substantially contiguous, face to face relationship, forming a multiple ply web of the present invention. It is also contemplated that a single web component can effectively form two "plies", for example, by being folded on itself. Therefore, a cellulosic layer folded on itself, with a nonwoven layer inserted between the two folded portions would effectively form a three ply web of the present invention.

As used herein, the term "liquid" refers primarily to body fluids, such as water, mucous, saliva, blood and other body fluids, but may also include other liquids. "Liquid" refers to liquid fluids, as opposed to gaseous or vapor fluids. Certain body fluids, such as mucous, may have very high viscosities, but are still considered liquids for the purposes of the present invention.

As used herein, "liquid-impermeable" with reference to the barrier layer means that liquid impinging upon the barrier layer does not readily penetrate from one side to the other. For example, in a paper web of the present invention, liquid brought into contact with one side of the paper would not be able to rapidly pass through to the other side due to the presence of the liquid impermeable barrier layer. Therefore, airborne droplets would be prevented from passing through the paper web, and liquid absorbed on one side of the paper web is prevented from passing through to the other side during use. Liquid impermeability can be determined by measuring hydrostatic head, as set forth in the Analytical Methods section below. For a web of the present invention a barrier layer able to withstand a hydrostatic head of at least 20 mm $H_2O$, and preferably at least 60 mm $H_2O$, and is considered to be liquid impermeable.

As used herein, "breathable" with reference to the barrier layer means that air, vapor, or other gases may pass through the barrier layer relatively unimpeded. Breathability, also referred to as vapor permeability herein, can be determined by measuring the Moisture Vapor Transmission Rate (MVTR) as measured by the method set forth in the Analytical Methods section below. For a web of the present invention, a barrier layer having an MVTR of greater than 4000 g$H_2O$/24hrs/m$^2$ is considered to be breathable, i.e., air permeable.

As used herein, "barrier layer" means a component ply of a paper web of the present invention which is liquid impermeable and breathable. In a preferred embodiment, a barrier layer is placed between two tissue paper layers to form a soft, flexible tissue, capable of preventing the passage of liquids, e.g., airborne or bloodborne pathogens, yet remaining air and vapor permeable.

As used herein, by "passive bonding" is meant bonding of component plies in the absence of the application of adhesive, thermal or ultrasonic means, embossing, or other active bonding means. For example, passive bonding can refer to the bonding that occurs when two plies of material are brought into contact with one another, such that the materials tend to "stick" to one another. Passive bonding is generally very light, and represents the natural affinity of materials to remain in contact once placed in contact with one another. For example, passive bonding may be due to static electric charges, cohesive forces, or simple mechanical bonding, such as may be analogous to "hook and loop" fasteners.

As used herein, by "active bonding" is meant bonding of component plies in known methods, such as by the application of adhesive, thermal or ultrasonic means, embossing, needling or other bonding means.

Cellulosic Paper Webs

Cellulosic paper webs **30** may be creped paper webs consisting essentially of cellulosic papermaking fibers and have a basis weight of 10 to 100 grams per square meter (gsm or $g/m^2$) per ply, preferably 13 to 40 $g/m^2$ per ply, and more preferably 15 to 25 $g/m^2$ per ply. In a preferred embodiment, cellulosic paper webs **30** are creped tissue webs suitable for use as facial tissue or premium facial tissue. Cellulosic paper webs 30 may be dried with a press felt, similar to how the commercially successful PUFFS® brand of facial tissues marketed by The Procter & Gamble Co is dried. It is currently preferred to use identical paper webs **30,** that is, substantially identical in basis weight, thickness, composition and other properties. However, it is contemplated that certain benefits may be realized by using paper webs having differing properties. For example, the component paper webs **30** may differ in basis weight, thickness, composition, or other properties, providing one side of the paper web with a relatively smooth surface, and one side having a relatively rough surface.

Cellulosic paper webs **30** of the present invention may be made by conventional processes known in the art for producing tissue paper useful for facial tissues, toilet tissue, paper towels, or napkins. However, cellulosic paper webs **30** of the present invention are preferably made by through air drying processes, and more preferably by use of a patterned resinous papermaking belt. A preferred patterned resinous papermaking belt comprises two primary components: a framework and a reinforcing structure. The framework preferably comprises a cured polymeric photosensitive resin.

One surface of the patterned resinous papermaking belt comprises the cured polymeric photosensitive resin and contacts one surface, for example, first surface **31,** of the cellulosic paper webs **30** carried thereon. During papermaking, this surface of the patterned resinous papermaking belt may imprint a pattern onto the first surface **31** of cellulosic paper webs **30** corresponding to the pattern of the framework.

A patterned resinous papermaking belt suitable for a preferred embodiment of the present invention may be made according to any of commonly assigned U.S. Patents: 4,514,345, issued April 30, 1985 to Johnson et al.; 4,528,239, issued July 9, 1985 to Trokhan; 5,098,522, issued March 24, 1992; 5,260,171, issued Nov. 9, 1993 to Smurkoski et al. ; 5,275,700, issued Jan. 4, 1994 to Trokhan; 5,328,565, issued July 12, 1994 to Rasch et al.; 5,334,289, issued Aug. 2, 1994 to Trokhan et al.; 5,431,786, issued July 11, 1995 to Rasch et al.; 5,496,624, issued March 5, 1996 to Stelljes, Jr. et al.; 5,500,277, issued March 19, 1996 to Trokhan et al.; 5,514,523, issued May 7, 1996 to Trokhan et al.; 5,554,467, issued Sept. 10, 1996, to Trokhan et al.; 5,566,724, issued Oct. 22, 1996 to Trokhan et al.; 5,624,790, issued April 29, 1997 to Trokhan et al.; and 5,628,876, issued May 13, 1997 to Ayers et al.

The cellulosic paper webs **30** of the present invention can have two primary regions. The first region comprises an imprinted region which is imprinted against the framework of a patterned resinous papermaking belt. The imprinted region preferably comprises an essentially continuous network. The continuous network of the first region of the cellulosic paper webs **30** is made on the essentially continuous framework of the patterned resinous papermaking belt and will generally correspond thereto in geometry and be disposed very closely thereto in position during papermaking.

The second region of the cellulosic paper webs **30** can comprise a plurality of domes dispersed throughout the imprinted network region. The domes generally correspond in geometry, and during papermaking in position, to the deflection conduits in the patterned resinous papermaking belt. The domes protrude outwardly from the essentially continuous network region of the paper, by conforming to the deflection conduits during the papermaking process. By conforming to the deflection conduits 16 during the papermaking process, the fibers in the domes are deflected in the Z-direction between the paper facing surface of the framework and the paper facing surface of the reinforcing structure. Preferably the domes are discrete.

The cellulosic paper webs **30** according to the present invention may be made according to any of commonly assigned U.S. Patents: 4,529,480, issued July 16, 1985 to Trokhan; 4,637,859, issued Jan. 20, 1987 to Trokhan; 5,364,504, issued Nov. 15, 1994 to Smurkoski et al.; and 5,529,664, issued June 25, 1996 to Trokhan et al. The cellulosic paper webs may have certain lotions or emollients added, for example according to any of commonly assigned U.S. Patents: 4,481,243, issued November 6, 1984 to Allen; and 4,513,051 issued April 23, 1985 to Lavash.

If desired, the cellulosic paper webs **30** may be dried and made on a through-air drying belt not having a patterned framework. Such cellulosic paper webs **30** may have discrete, high density regions and an essentially continuous low density network. During or after drying, the cellulosic paper webs **30** may be subjected to a differential vacuum to increase its caliper and desensify selected regions. Such paper, and the associated belt, may be made according to the following patents: 3,301,746, issued Jan. 31, 1967 to Sanford et al.; 3,905,863, issued Sept. 16, 1975 to Ayers; 3,974,025, issued Aug. 10, 1976 to Ayers; 4,191,609, issued March 4, 1980 to Trokhan; 4,239,065, issued Dec. 16, 1980 to Trokhan; 5,366,785 issued Nov. 22, 1994 to Sawdai; and 5,520,778, issued May 28, 1996 to Sawdai.

The reinforcing structure may be a felt, also referred to as a press felt as is used in conventional papermaking without through-air drying. The framework of a patterned resinous papermaking belt may be applied to the felt reinforcing structure as taught by commonly assigned U.S. Patents 5,556,509, issued Sept. 17, 1996 to Trokhan et al.; 5,580,423, issued Dec. 3, 1996 to Ampulski et al.; 5,609,725, issued Mar. 11, 1997 to Phan; 5,629,052 issued May 13, 1997 to Trokhan et al.; 5,637,194, issued June 10, 1997 to Ampulski et al. and 5,674,663, issued Oct. 7, 1997 to McFarland et al.

The cellulosic paper webs 30 of the present invention may also be foreshortened as known in the art. Foreshortening can be accomplished by creping the cellulosic paper webs 30 from a rigid surface, and preferably from a cylinder. A Yankee drying drum is commonly used for this purpose. Creping is accomplished with a doctor blade as is well known in the art. Creping may be accomplished according to commonly assigned U.S. Patent 4,919,756, issued April 24, 1992 to Sawdai. Alternatively or additionally, foreshortening may be accomplished via wet microcontraction as taught in commonly assigned U.S. Patent 4,440,597, issued April 3, 1984 to Wells et al.

Barrier Layer

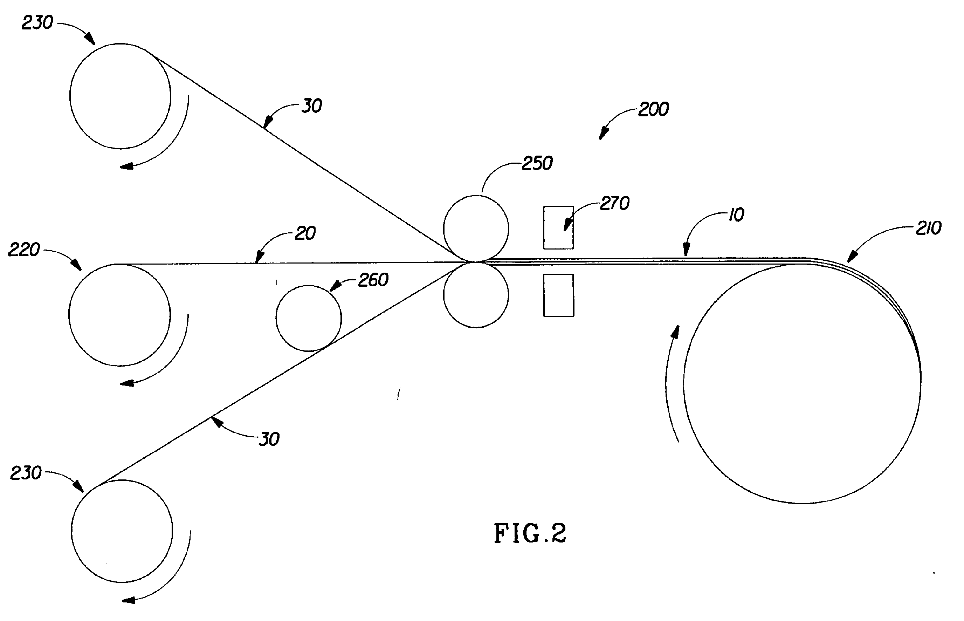

Liquid impermeable, breathable barrier layer **20** comprises meltblown fibers formed into a nonwoven web. Preferably the web is formed such that it can be stored as roll stock for use in the process of making a paper web having a barrier layer, as described below with reference to FIG. 2. By forming into roll stock, the barrier layer **20** can be produced at optimum rates, and stored for future incorporation as one of the component plies in a paper web **10** of the present invention. This is currently considered the most economical manner in which to incorporate a barrier layer into a multiple ply paper product. However, it is also contemplated that barrier layer **20** can be produced as a web and incorporated directly into a paper web **10**, without the barrier layer or the paper web first being rolled into rollstock. For example, meltblown fibers as the barrier layer **20** could be added at the dry end of the papermaking process.

Barrier layer **20** can be formed from any composition, and is preferably a thermoplastic material capable of extrusion into microfibers. Examples include polyolefins such as polypropylene and polyethylene, polyesters such as polyethylene terephthalate, polyamides such as nylon, as well as copolymers and blends of these and other thermoplastic polymers. Preferred among these are polyolefins, and most preferred are polypropylenes due to their ease of processing into microfibers by meltblown extrusion processes.

Barrier layer **20** can be a very low basis weight polypropylene meltblown nonwoven. For example, barrier layer **20** can have a basis weight from 1 to 8 g/m$^2$. The meltblown fibers preferably have average diameters less than 10 microns, and more preferably less than 6 microns. In a preferred embodiment, the meltblown fibers have average diameters of less than 2.5, and more preferably less than 2 microns.

Meltblowing fibers for barrier layer **20** can be carried out by methods known in the art. For example, meltblowing generally comprises extruding a thermoplastic through a die tip in the presence of a stream of air which breaks up the extrudate into individual fibers. In the case of barrier layer **20** manufacture, the fibers are then collected on a moving belt and solidified to form a nonwoven fibrous structure. A preferred method of meltblowing is described in U.S. pat. No. 3,978,185 to Buntin et al, issued August 31, 1976.

Barrier layer **20** can be formed into a web and wound on a supply roll **220** for subsequent processing as roll stock. Barrier layer **20** can be processed into paper web **10** by a combining apparatus **200**, as shown in FIG. 2. In the configuration shown, cellulosic webs **30** can be drawn off rolls **230**. Barrier layer **20** and cellulosic web plies **30** can be combined into web **10** of the present invention by drawing through combining rollers 250, which bring the component plies into intimate contact, and may compress the component plies to achieve passive bonding of the component plies. Therefore, no adhesive is used to bond the plies together; the plies are held together passively, i.e., by passive bonding, as described below.

It has been unexpectedly found that it is not necessary to actively bond the plies into a multiple ply web. Instead, bonding can occur passively, upon combining the component plies into a multiple ply paper web of the present invention. For example, with reference to FIG. 2, sufficient bonding occurs at combining rollers **250** to hold the component plies in intimate contact for further processing and use. For example, paper web **10** may be cut, folded, and used as a tissue, without unintentional debonding of the component plies. This surprising result provides for a multiple ply paper web **10** without the additional cost of bonding, such as by thermal bonding, adhesive bonding, ultrasonic bonding, or bonding by embossing. As well, passive bonding avoids the use of adhesives between the plies which can add significant stiffness to the multiple ply web. Stiffness is undesirable in such webs, particularly for webs for use as facial or bath tissues.

Passive bonding provides relatively little bond strength between the plies, which is sufficient to hold the plies together for normal use. For example, when used as a folded and stacked tissue, the paper web **10** of the present invention exhibits sufficient ply-to-ply bonding to prevent unintentional debonding of the plies. Without being bound by theory, it is believed that the passive bonding of the webs may be due to static electric charges present in the materials, and may be somewhat variable due to other factors, for example, relative moisture levels in the web components. Also, the light passive bonding may be due to mechanical bonding of the exposed fibers of barrier layer **20** to contacting fibers of cellulosic webs **30.** The mechanical bonding may be analogous to "hook and loop" fasteners, wherein bonding is facilitated by the engagement of male and female members of the constituent components.

The beneficial results of having a breathable barrier layer incorporated into a multiple ply paper web include preventing the spread of disease-carrying germs that could pass through the tissue onto the hands of the user. For example, a single sneeze may produce from a few hundred thousand to a few million droplets of fluid, which are potential sources of viruses, bacteria, or other pathogens. Furthermore, it appears that the only defense against the common cold is the prevention of its spread. A liquid impermeable (i.e., impermeable to droplets of fluid) layer serves as an effective barrier to transmission of fluid droplets when used as a component in a tissue, thereby reducing or eliminating the chance for disease-carrying germs to pass through.

Aside from simply preventing the spread of airborne fluid droplets, the paper web of the present invention is likewise useful for keeping the hands of the user dry during acts related to sneezing and nose blowing and the like. For example, post sneeze or nose blowing wiping and cleaning can often leave the fingers or hands of the user wet. The barrier layer of the present invention can prevent this undesirable wetness. Further, the hands and fingers of adults cleaning the nose or mouth of children can be kept dry due to the liquid impermeability of the barrier layer.

Further benefits of a breathable barrier layer in a tissue product include the safety of a breathable, i.e., air permeable, product being used near the mouth or nose. It is generally undesirable to have an air-impermeable component for use near the nose or mouth, due to the possibility of suffocation. This problem is particularly relevant to the use of air-impermeable facial tissue products by children. If an air-impermeable tissue is used improperly, or if it is ingested and becomes lodged in the user's air passages, it can cause suffocation.

The benefits of the present invention are not limited to facial tissue embodiments. For example, bath tissue, commonly termed toilet paper, may also benefit from being liquid impermeable. Having a soft, flexible, liquid impermeable bath tissue can eliminate the unpleasant experience of wet fingers or hands during or after use.

In a preferred embodiment, the plies of the multiple ply paper web **30** of the present invention are passively bonded by the method disclosed above with reference to the apparatus shown in FIG. 2.

It has been found that the basis weight of barrier layer **20** impacts breathability and barrier properties of the paper web **10**. Breathability is measured according to the test method for determining Moisture Vapor Transmission Rates (MVTR) as shown in the Analytical Methods section below. Barrier properties are determined by measurement of hydrostatic head of water, as shown in the Rising Water Column test method, also set forth in the Analytical Methods section below.

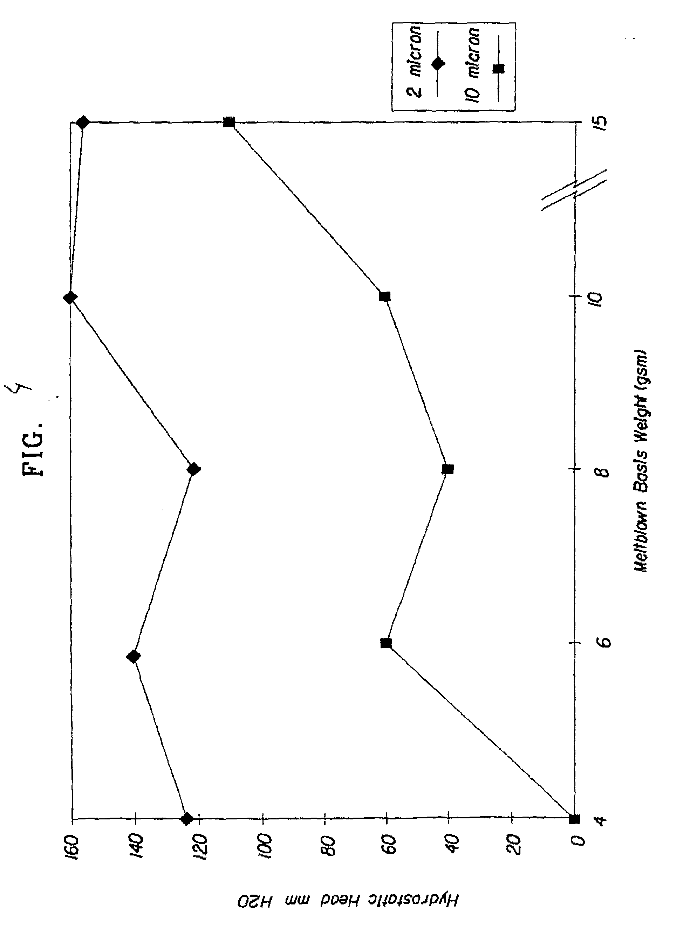

FIG. 4 shows a graphical representation of MVTR vs. basis weight of the meltblown barrier layer **20** for paper webs **10** having differing barrier layer **20** fiber diameters. As shown, for a barrier layer having average fiber diameters of 10 microns, the MVTR ($gH_2O/24hrs/m^2$) ranges from about 6400 at a basis weight of about 4 gsm to about 4600 at 15 gsm. It appears that, for average fiber diameters of 10 microns, as the basis weight increases MVTR generally decreases. However, for fiber diameters of about 2 microns, the MVTR was more consistent, ranging from about 5200 to about 4500, and actually showed an increase from 8 gsm to 15 gsm. It is believed that MVTR values above about 4000 are sufficient for safely incorporating barrier layer **20** into a paper web **10** suitable for use as a facial tissue.

FIG. 5 shows a graphical representation of hydrostatic head vs. basis weight of the meltblown barrier layer **20** for paper webs **10** having different barrier layer **20** fibers diameters. As shown in FIG. 5, it appears that the lower the average fiber diameter, for a given basis weight, the greater the hydrostatic head necessary to cause liquid transmission through the barrier layer **20.** For example, at a basis weight of 4 gsm, a barrier layer having average fiber diameters of 10 microns, holds about 0 mm $H_2O$ of hydrostatic head. However, for the same basis weight, a barrier layer having average fiber diameters of about 2 microns will hold about 125 mm of $H_2O$ of hydrostatic head. This relative differential holds for other basis weights, for example, up to about 15 gsm, in which the 10 micron and 2 micron diameter embodiments hold about 140 mm $H_2O$ and 160 mm $H_2O$, respectively.

## EXAMPLE

By way of example, five samples of facial tissue were made, each as a three ply laminate, as shown in FIG. 1. A meltblown center ply barrier layer was placed between two plies of wet-laid cellulosic tissue paper. Each sample was produced on simple unwind/combine/rewind equipment, as shown in FIG. 2, with no active bonding taking place.

Each sample was identical, except for differing basis weights of the meltblown ply. The three samples were produced with meltblown barrier layers having basis weights of 4, 6, 8, 10, and 15 gsm, respectively.

The cellulosic tissue paper webs were produced in a through air drying process, generally according to the teachings of the aforementioned U.S. Pat. No. 4,637,859. The paper webs had a basis weight of 12.7 lb/3000 sqft (about 21 gsm) per ply, and were comprised of about 40% Northern Softwood Kraft, and about 60% Eucalyptus fibers. Additives injected into the pulp slurry in the wet end include Kymene 557H at a ratio of about 10 lbs of Kymene solids per ton of dry paper, and carboxy methyl cellulose (CMC), available under the trade name 7MT, injected at a ratio of about 2 lbs of solids per ton of dry paper. Both Kymene and CMC are available from Hercules, Inc. of Wilmington DE.

The meltblown ply was produced as a nonwoven web utilizing a 1-meter wide J&M Laboratories, Inc. polymer meltblown die. The die had 30 holes per linear inch with an orifice diameter of 0.16 inch, and a 10:1 length to diameter ratio. An Exxon, Inc. 3546G 1200MFR polypropylene resin was extruded to an average fiber diameter of about 2 to 2.5 microns. During extrusion of the polypropylene, the fibers were attenuated by impinging air streams. The attenuated fibers were laid down on a vacuum assisted forming wire where they formed the completed nonwoven web. The nonwoven web was then wound as roll stock for subsequent processing into a web of the present invention.

The two cellulosic webs were then processed as described above, with reference to FIG. 2, as outer plies separated by the meltblown ply. No adhesive bonding, thermal bonding, or embossing bonding was used. The plies of the finished web were passively bonded by bringing together in intimate contact by pressure rollers. The amount of passive bonding is described below.

Table 1 below shows the hydrostatic head and MVTR levels for the five samples. As disclosed above, the combination of high levels of liquid impermeability together with high levels of air or vapor permeability is an unexpected benefit of the present invention.

Table 1: Hydrostatic Head and MVTR for Meltblown Ply of Examples

| Basis Weight $(g/m^2)$ | Hydrostatic Head $(mm\ H_2 0)$ | MVTR $(gH_2 0/24hrs/m^2)$ |
|---|---|---|
| 4 | 125 | 5200 |
| 6 | 137 | 5000 |
| 8 | 112 | 4600 |
| 10 | 160 | 4700 |
| 15 | 158 | 5000 |

The bonding of the webs, termed "passive bonding" produced a weak, yet sufficient, bond between the component plies. The level of bonding appears to be independent of the basis weight of the meltblown nonwoven. By "sufficient" bonding it is meant that the plies bonded together with enough bond strength to prevent undesired delamination when the web is cut, folded, stacked, and used by the consumer.

Analytical Methods

Moisture Vapor Transmission Rate (MVTR)

MVTR was determined by a method that is based in part on ASTM E96, which is hereby incorporated by reference, and is reported in $gH_2 0/24hrs/m^2$.

This method is referred to as the "desiccant method" for measuring moisture vapor transmission rate as set forth below. Briefly summarizing this method, a defined amount of desiccant ($CaCl_2$) is put into a flanged "cup" like container. The sample material is placed on the top of the container and held securely by a retaining ring and gasket. The assembly is then weighed and recorded as the initial weight. The assembly is placed in a constant temperature (40°C +/- 3 C) and humidity (75% RH +/- 3%) chamber for five (5) hours. The assembly is then removed from the chamber, sealed with plastic wrap to prevent further moisture intake, and allowed to equilibrate for at least 30 minutes at the temperature of the room (e.g., 20 +/- 2°C) where the balance is located. The amount of moisture absorbed by the $CaCl_2$ is determined gravimetrically and used to estimate the moisture vapor transmission rate (MVTR) of the sample by weighing the assembly deducting the initial weight from the final assembly weight. The moisture vapor transmission rate (MVTR) is calculated and expressed in $gH_2 0/24hrs/m^2$ using the formula below. Samples are assayed in triplicate. The reported MVTR is the average of the triplicate analyses, rounded to the nearest 100. The significance of differences in MVTR values found for different samples can be estimated based on the standard deviation of the triplicate assays for each sample.

Suitable Analytical Balances for performing the gravimetric measurements include a Mettler AE240 or equivalent (300 g capacity) or a Sartorius 2254S0002 or equivalent (1000 g capacity). A suitable sample holding assembly comprises a round cup and retaining ring machined from Delrin® (such as that available from McMaster-Carr Catalog #8572K34) with a gasket made of GC Septum Material (Alltech catalog #6528). The circular open area of the mouth of the cup was 0.0007069 square meters. The desiccant comprises $CaCl_2$ 156 for U-tubes, available from Wako Pure Chemical Industries, Ltd., Richmond, VA. Product # 030-00525. The plastic wrap comprises Saran Wrap, available from Dow Chemical Company, or equivalent. A suitable environmental chamber is available from Electro-Tech Systems, Inc, ETS, model 506A or equivalent. The temperature controller is ETS model 513A or equivalent, the humidity controller is ETS model 514 or equivalent, the heating unit is a Marley Electric Heating Model 2512WC (400 watts) or equivalent, the humidifier is ETS model 5612B or equivalent.

The $CaCl_2$ can be used directly from a sealed bottle as long as the size of the lumps is such that they do not pass through a No. 10 sieve. Usually the top two-thirds of the bottle does not have to be sieved. However, the bottom third contains fines that should be removed by sieving. The $CaCl_2$ can be used from a closed container without drying. It can be dried at 200°C for 4 hours if required.

Representative samples should be obtained from the materials to be tested. Ideally, these samples should be taken from different areas of the material so as to represent any variations present. Three samples of each material are needed for this analysis.

Samples should be cut into rectangular pieces approximately 1.5" x 2.5". If the samples are not uniform, clearly mark the area for which breathability is to be evaluated. If the samples are not bi-directional, clearly mark the side that is to be exposed to high humidity. For samples used in diapers and catamenials, this is usually the side that contacts the absorbent component of the article or the wearer in the case of garments.

To begin a test session, (1) weigh approximately 15 grams of $CaCl_2$ and place in the MVTR cup. Gently tap the cup about 10 times, or as needed, on the bench top to distribute and lightly pack the $CaCl_2$. The $CaCl_2$ should be level and about 1 cm below the top of the cup. Adjust the amount of $CaCl_2$ until the 1 cm distance is achieved. Then (2) place the sample, with the high humidity side up (if required), over the opening in the top of the cup. Make sure that the sample overlaps the opening so that a good seal will be obtained. Next, (3) place the gasket material and the retaining ring on the top of the cup, making sure that the sample has not moved. Securely fasten the retaining ring and seal the sample to the top of the cup, being careful not to distort the cup. Then (4) weigh the MVTR cup assembled in step 3. Record this weight as the initial weight. This process should be conducted in a relatively short time, e.g., <2 minutes per cup.

After weighing the assembly, (5) place the sample in the CT/CH chamber for 5.0 hours (to the nearest minute). When the time has elapsed, (6) remove the sample from the CT/CH chamber, tightly cover it with plastic wrap secured by a rubber band. Record the time of sample removal to within the nearest minute. Allow samples to equilibrate for at least 30 minutes at the temperature of the room where the balance is located. After equilibration, (7) remove the plastic wrap and rubber band and weigh the cup. Record this weight as the final weight.

The MVTR is then calculated in units of $gH_2O/24hrs/m^2$ using the formula:

$$MVTR = \frac{(\text{final weight - initial weight}) \times 24.0}{0.0007069 \times 5.0 \ (\text{time in chamber})}$$

where:

24.0 is used to convert the data to the 24 hour basis;
0.0007069 is the open area of the mouth of the cup in square meters; and
5.0 is the duration of the test in hours

Calculate the average MVTR for each set of triplicate. Round the average MVTR for each sample set to the nearest 100. Report this value as the MVTR for the sample of material.

Hydrostatic Head

Hydrostatic head is measured using a rising water column tester. A rising water column tester is a device constructed in such a way that distilled water rises at 254 +/- 5 mm per minute up a 38.1 mm inside diameter column, thus gradually increasing the pressure being applied to a defined suspended sample portion. The test is continued until a maximum water level is reached or until water penetrates through the sample.

The test is conducted in a conditioned room with the temperature at 73°F $\pm$ 2.0 °F (22.8 $\pm$ 0.63 °C) and a relative humidity of 50 ± 2%. The sample is clamped to the bottom of the column fixture, utilizing an appropriate gasket material (o-ring style) to prevent side leakage during testing. The area of water that contacts the sample is equal to the cross sectional area of the water column. The column is graduated in mm.

Water is pumped into the bottom of the water column at the specified rate. Using a mirror, the bottom of the sample is observed as distilled water is being pumped into the column. When a drop of water falls from the sample, the level on the graduated column is recorded to the nearest mm. If a water droplet never falls, the maximum reading is recorded. If water immediately penetrates the sample and provided no resistance whatsoever, a zero reading is recorded.

## Claims

1. A facial tissue consisting of a multiple ply paper web comprising at least one outer cellulosic ply passively bonded, i.e. in the absence of the application of adhesive, thermal or ultrasonic means, embossing, or other active bonding means, in a face to face relationship to at least one inner ply, said inner ply comprising a liquid-impermeable, breathable web comprising meltblown fibers formed into a nonwoven web.

2. The facial tissue of Claim 1, wherein said cellulosic ply comprises creped paper having a basis weight of from 10 g/m$^2$ to 100 g/m$^2$.

3. The facial tissue of Claim 1, wherein said cellulosic ply comprises creped paper having a basis weight of from 15 g/m$^2$ to 25 g/m$^2$.

4. The facial tissue of Claim 1 wherein said meltblown fibers are formed from the group consisting of: polyolefins such as polypropylene and polyethylene, polyesters such as polyethylene terephthalate, polyamides such as nylon, as well as copolymers and blends of these and other thermoplastic polymers.

5. The facial tissue of Claim 4, wherein said inner ply has a basis weight from 1 g/m$^2$ to 15 g/m$^2$.

6. The facial tissue of Claim 4, wherein said inner ply has a basis weight from 1 g/m$^2$ to 8 g/m$^2$.

7. The facial tissue of Claim 4, wherein said meltblown fibers have an average diameter of less than or equal to 10 microns.

8. The facial tissue of Claim 4, wherein said meltblown fibers have an average diameter of less than or equal to 2.5 microns.

9. The facial tissue of Claim 1, wherein said inner ply has a Moisture Vapor Transmission Rate of at least 4000 gH$_2$0/24hrs/m$^2$ as measured by the Dessicant Method as described herein.

10. The facial tissue of Claim 1, wherein said inner ply has a Moisture Vapor Transmission Rate of at least 5000 gH$_2$0/24hrs/m$^2$ as measured by the Dessicant Method as described herein.

11. The facial tissue of Claim 1, wherein said inner ply can hold a hydrostatic head of at least 20 mm H$_2$0 as measured by the Hydrostatic Head Method as described herein.

12. The facial tissue of Claim 1, wherein said inner ply can hold a hydrostatic head of at least 40 mm H$_2$0 as measured by the Hydrostatic Head Method as described herein.

13. The facial tissue of Claim 1 wherein said inner ply comprises a meltblown nonwoven web having a basis weight of less than or equal to g/m$^2$,

## Patentansprüche

1. Kosmetiktuch, bestehend aus einer mehrlagigen Papierbahn, die mindestens eine äußere cellulosische Lage umfasst, die passiv, das heißt, ohne Anwendung eines Klebstoffs, thermischer oder Ultraschallmittel, Prägen oder anderer aktiver Bindungsmittel in einer einander gegenüberliegenden Beziehung hinsichtlich mindestens einer inneren Lage gebunden ist, wobei die innere Lage eine flüssigkeitsundurchlässige, atmungsaktive Bahn umfasst, die schmelzgeblasene Fasern umfasst, die zu einer Vliesbahn gebildet sind.

2. Kosmetiktuch nach Anspruch 1, wobei die cellulosische Lage gekrepptes Papier mit einem Basisgewicht von 10 g/m$^2$ bis 100 g/m$^2$ umfasst.

3. Kosmetiktuch nach Anspruch 1, wobei die cellulosische Lage gekrepptes Papier mit einem Basisgewicht von 15 g/m$^2$ bis 25 g/m$^2$ umfasst.

4. Kosmetiktuch nach Anspruch 1, wobei die schmelzgeblasenen Fasern aus der Gruppe gebildet sind, bestehend aus: Polyolefinen wie Polypropylen und Polyethylen, Polyestern wie Polyethylenterephthalat, Polyamiden wie Nylon sowie Copolymeren und Mischungen dieser und anderer thermoplastischer Polymere.

5. Kosmetiktuch nach Anspruch 4, wobei die innere Lage ein Basisgewicht von 1 g/m$^2$ bis 15 g/m$^2$ umfasst.

6. Kosmetiktuch nach Anspruch 4, wobei die innere Lage ein Basisgewicht von 1 g/m$^2$ bis 8 g/m$^2$ umfasst.

7. Kosmetiktuch nach Anspruch 4, wobei die schmelzgeblasenen Fasern einen durchschnittlichen Durchmesser von weniger als oder gleich 10 Mikrometern aufweisen.

8. Kosmetiktuch nach Anspruch 4, wobei die schmelzgeblasenen Fasern einen durchschnittlichen Durchmesser von weniger als oder gleich 2,5 Mikrometern aufweisen.

9. Kosmetiktuch nach Anspruch 1, wobei die innere Lage gemäß den Messungen durch das hierin beschriebene Entfeuchtungsverfahren eine Feuchtigkeitsdurchdringungsrate von mindestens 4000 gH$_2$O/24 h/m$^2$ aufweist.

10. Kosmetiktuch nach Anspruch 1, wobei die innere Lage gemäß dem hierin beschriebenen Entfeuchtungsverfahren eine Feuchtigkeitsdurchdringungsrate von mindestens 5000 gH$_2$O/24 h/m$^2$ aufweist.

11. Kosmetiktuch nach Anspruch 1, wobei die innere Schicht gemäß dem hierin beschriebenen Wassersäulenverfahren eine Wassersäule von mindestens 20 mm H$_2$O aufnehmen kann.

12. Kosmetiktuch nach Anspruch 1, wobei die innere Schicht gemäß dem hierin beschriebenen Wassersäulenverfahren eine Wassersäule von mindestens 40 mm H$_2$O aufnehmen kann.

13. Kosmetiktuch nach Anspruch 1, wobei die innere Lage eine schmelzgeblasene Vliesbahn mit einem Basisgewicht von weniger als oder gleich 8 g/m$^2$ umfasst.

**Revendications**

1. Papier-mouchoir constitué d'une nappe de papier multicouche comprenant au moins une couche externe cellulosique liée passivement, c'est-à-dire en l'absence de l'application de moyens adhésifs, thermiques ou ultrasoniques, gaufrage, ou d'autres moyens de liaison active, dans une relation face à face à au moins une couche interne, ladite couche interne comprenant une nappe imperméable aux liquides, perméable à l'air comprenant des fibres soufflées en fusion formées en une nappe non tissée.

2. Papier-mouchoir selon la revendication 1, dans lequel ladite couche cellulosique comprend du papier crêpé ayant une masse surfacique allant de 10 g/m$^2$ à 100 g/m$^2$.

3. Papier-mouchoir selon la revendication 1, dans lequel ladite couche cellulosique comprend du papier crêpé ayant une masse surfacique allant de 15 g/m$^2$ à 25 g/m$^2$.

4. Papier-mouchoir selon la revendication 1, dans lequel lesdites fibres soufflées en fusion sont formées à partir du groupe constitué de : polyoléfines telles que le polypropylène et le polyéthylène, polyesters tels que le polyéthylène téréphtalate, polyamides tels que le nylon, ainsi que copolymères et mélanges de ceux-ci et d'autres polymères thermoplastiques.

5. Papier-mouchoir selon la revendication 4, dans lequel ladite couche interne a une masse surfacique allant de 1

g/m$^2$ à 15 g/m$^2$.

6. Papier-mouchoir selon la revendication 4, dans lequel ladite couche interne a une masse surfacique allant de 1 g/m$^2$ à 8 g/m$^2$.

7. Papier-mouchoir selon la revendication 4, dans lequel lesdites fibres soufflées en fusion ont un diamètre moyen inférieur ou égal à 10 microns.

8. Papier-mouchoir selon la revendication 4, dans lequel lesdites fibres soufflées en fusion ont un diamètre moyen inférieur ou égal à 2,5 microns.

9. Papier-mouchoir selon la revendication 1, dans lequel ladite couche interne a une vitesse de transmission de vapeur humide d'au moins 4000 gH$_2$0/24 h/m$^2$ telle que mesurée par le procédé au dessicant tel que décrit ici.

10. Papier-mouchoir selon la revendication 1, dans lequel ladite couche interne a une vitesse de transmission de vapeur humide d'au moins 5000 gH$_2$0/24 h/m$^2$ telle que mesurée par le procédé au dessicant tel que décrit ici.

11. Papier-mouchoir selon la revendication 1, dans lequel ladite couche interne peut maintenir une charge hydrostatique d'au moins 20 mm H$_2$O telle que mesurée par le procédé de charge hydrostatique tel que décrit ici.

12. Papier-mouchoir selon la revendication 1, dans lequel ladite couche interne peut maintenir une charge hydrostatique d'au moins 40 mm H$_2$O telle que mesurée par le procédé de charge hydrostatique tel que décrit ici.

13. Papier-mouchoir selon la revendication 1, dans lequel ladite couche interne comprend une nappe non tissée soufflée en fusion ayant une masse surfacique inférieure ou égale à 8 g/m$^2$.

FIG.1

FIG.2

EP 1 112 177 B1

FIG 3

FIG. 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 5196244 A, Beck
- US 4885202 A, Lloyd
- US 4514345 A, Johnson
- US 4528239 A, Trokhan
- US 5098522 A
- US 5260171 A, Smurkoski
- US 5275700 A, Trokhan
- US 5328565 A, Rasch
- US 5334289 A, Trokhan
- US 5431786 A, Rasch
- US 5496624 A, Stelljes, Jr.
- US 5500277 A, Trokhan
- US 5514523 A, Trokhan
- US 5554467 A, Trokhan
- US 5566724 A, Trokhan
- US 5624790 A, Trokhan
- US 5628876 A, Ayers
- US 4529480 A, Trokhan
- US 4637859 A, Trokhan
- US 5364504 A, Smurkoski
- US 5529664 A, Trokhan
- US 4481243 A, Allen
- US 4513051 A, Lavash
- US 3301746 A, Sanford
- US 3905863 A, Ayers
- US 3974025 A, Ayers
- US 4191609 A, Trokhan
- US 4239065 A, Trokhan
- US 5366785 A, Sawdai
- US 5520778 A, Sawdai
- US 5556509 A, Trokhan
- US 5580423 A, Ampulski
- US 5609725 A, Phan
- US 5629052 A, Trokhan
- US 5637194 A, Ampulski
- US 5674663 A, McFarland
- US 4919756 A, Sawdai
- US 4440597 A, Wells
- US 3978185 A, Buntin